(19) Europäisches Patentamt
European Patent Office
Office européen des brevets

(11) **EP 2 795 596 B1**

## (12) EUROPÄISCHE PATENTSCHRIFT

(45) Veröffentlichungstag und Bekanntmachung des Hinweises auf die Patenterteilung:
**21.02.2018 Patentblatt 2018/08**

(21) Anmeldenummer: **12812888.1**

(22) Anmeldetag: **05.12.2012**

(51) Int Cl.:
**G08B 13/196** $^{(2006.01)}$

(86) Internationale Anmeldenummer:
**PCT/EP2012/074497**

(87) Internationale Veröffentlichungsnummer:
**WO 2013/092213 (27.06.2013 Gazette 2013/26)**

(54) **SPEICHERSYSTEM MIT STATISCHER ZUORDNUNG VON SPEICHERMEDIEN SOWIE VERFAHREN ZUR EINRICHTUNG DES SPEICHERSYSTEMS**

STORAGE SYSTEM WITH STATIC ASSIGNMENT OF STORAGE MEDIA AND METHOD FOR SETTING UP THE STORAGE SYSTEM

SYSTÈME DE STOCKAGE AVEC AFFECTATION STATIQUE DE SUPPORTS DE STOCKAGE, ET PROCÉDÉ D'INSTALLATION DU SYSTÈME DE STOCKAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2011 DE 102011089043**

(43) Veröffentlichungstag der Anmeldung:
**29.10.2014 Patentblatt 2014/44**

(73) Patentinhaber: **Robert Bosch GmbH**
**70442 Stuttgart (DE)**

(72) Erfinder: **NEUBECK, Alexander**
**90587 Obermichelbach (DE)**

(56) Entgegenhaltungen:
**DE-A1-102006 018 959     US-A1- 2003 117 500**
**US-A1- 2006 204 229**

**Beschreibung**

Stand der Technik

Die Erfindung betrifft ein Speichersystem mit einer Anzahl von M Speichermedien, mit einer Anzahl von N Datenproduzenten, die jeweils einen Datenstrom bereitstellen und jeweils eine oder mehrere Datenmitglieder aufweisen, und mit einer Speichermanagementeinrichtung zur Verteilung der Datenströme der N Datenproduzenten an die M Speichermedien. Die Erfindung betrifft auch ein Verfahren zur Einrichtung des Speichersystems.

Speichersystem üblicher Architektur können eine Mehrzahl von datenproduzierenden Einrichtungen sowie eine Mehrzahl von Speichermedien aufweisen, welche in einem Netzwerk angeordnet sind und die Daten der datenproduzierenden Einheiten speichern. Die Verteilung der Speichermedien auf die speicherproduzierenden Einheiten erfolgt über einen Speichermanager, der auch für das sogenannte Load Balancing verantwortlich ist, das gewährleisten soll, dass die Speichermedien optimal genutzt werden und im Falle des Ausfalls einzelner Speichermedien die Aufzeichnung auf andere Speichermedien fortgesetzt werden kann. Hierbei kann der Speichermanager prinzipiell auf alle Speichermedien in einem Netzwerk frei zugreifen.

Besonders im Bereich der Überwachungssysteme mit Überwachungskameras ist die Organisation der Speicherung der entstehenden Daten eine Herausforderung, da zum einen durch die Überwachungskameras große Datenmengen erzeugt werden und zum anderen es für den Anwender besonders wünschenswert ist, dass diese Daten lückenlos und insbesondere ohne Ausfall gespeichert werden.

In diesem Zusammenhang offenbart die Druckschrift DE10301455A1, ein Verfahren zur Aufzeichnung von Video-/Audiodaten. Bei dem Verfahren wird vorgeschlagen, dass ein lokaler Datenspeicher über eine datentechnische Kopplung mit mindestens einer Aufzeichnungsvorrichtung verbunden ist, die eine größere Speicherkapazität aufweist als der lokale Datenspeicher, so dass ein virtueller Datenspeicher für die Aufnahmevorrichtung gebildet wird. Die Aufzeichnungsvorrichtung kann über eine Vielzahl von Speichermedien verfügen. Das Verfahren wird grundsätzlich auch als NVR-Prinzip (NVR-Network Video Recording) bezeichnet.

Die Druckschrift DE 10 2006 018 959 A1 betrifft ein Videoaufzeichnungssystem sowie ein Verfahren und Computerprogramm zur Speicherplatzverteilung in einem Videoaufzeichnungssystem mit einem Speichernetzwerk. Das Speichernetzwerk umfasst Schnittstellen zur vernetzten Anbindung von mehreren Speicherservern und mehreren Schreibclients. Bevorzugt ist jedem Speicherserver und/oder jedem Schreibclient eine individuelle oder eigene Schnittstelle im Speichernetzwerk zugeordnet. Eine Allokationsvorrichtung dient zur Verwaltung des auf den Speicherserver befindlichen Speichervolumens. Die Allokationsvorrichtung erlaubt eine dynamische Zuweisung von statisch eingeteilten Speicherblöcken an die Schreibclients.

Die Druckschrift US 2003/0117500 A1, die den nächstkommenden Stand der Technik bildet, offenbart ebenfalls ein Netzwerk für ein Videoaufzeichnungssystem, wobei einer Mehrzahl von Videokameras ein Videoserver zugeordnet ist und wobei über das Netzwerk die Videodaten mehreren Netzwerkspeichern zugeführt werden können.

Offenbarung der Erfindung

Im Rahmen der Erfindung wird ein Speichersystem mit den Merkmalen des Anspruchs 1 sowie ein Verfahren mit den Merkmalen des Anspruchs 6 und ein Computerprogramm mit den Merkmalen des Anspruchs 9 vorgeschlagen. Bevorzugte oder vorteilhafte Ausführungsformen der Erfindung ergeben sich aus den Unteransprüchen, der nachfolgenden Beschreibung sowie den beigefügten Figuren.

Das erfindungsgemäße Speichersystem ist zur Speicherung von digitalen Daten geeignet und/oder ausgebildet. Es umfasst eine Anzahl von M Speichermedien, welche prinzipiell durch flüchtige und/oder nicht-flüchtige Speicher gebildet sein können. Um jedoch einen Datenverlust bei einem Stromausfall zu vermeiden, ist es bevorzugt, dass mindestens der Großteil, vorzugsweise alle M Speichermedien als nicht-flüchtige Speicher ausgebildet sind. Insbesondere sind die Speichermedien als physikalische Speichermedien, z.B. als Festplatten ausgebildet.

Das Speichersystem umfasst ferner eine Anzahl von N Datenproduzenten, die jeweils einen Datenstrom mit einer Übertragungsrate bereitstellen. Ein Datenstrom ist eine zeitliche Abfolge von Daten, beispielsweise von Bilddaten bei einem Bilddatenstrom. Der Datenstrom weist insbesondere digitale Daten auf. Jeder der N Datenproduzenten kann eine oder mehrere Datenmitglieder aufweisen. Bei einem Datenproduzenten kann es sich somit um ein einziges Datenmitglied oder um eine Gruppe Datenmitglieder handeln, die zu einem Datenproduzenten zusammengefasst sind. Die Datenmitglieder erzeugen den Datenstrom eines Datenproduzenten.

Das Speichersystem umfasst eine Speichermanagementeinrichtung, welche zur Verteilung der Datenströme der N Datenproduzenten an die M Speichermedien ausgebildet ist. Dies wird insbesondere realisiert, indem die Speichermanagementeinrichtung die N Datenproduzenten den M Speichermedien zuordnet, so dass die Datenströme der Datenproduzenten an die ihnen zugeordneten Speichermedien geleitet werden.

Es wird vorgeschlagen, dass jedem der N Datenproduzenten eine Gruppe von (A+1) der M Speichermedien statisch zugeordnet ist, wobei die Ungleichung $1 \leq A < M$ gilt. Besonders bevorzugt gilt für jeden der N Datenproduzenten der gleiche Wert für A, so dass jedem der N Datenproduzenten die gleiche Anzahl der M Speichermedien statisch zugeordnet ist.

Dieser Umsetzung liegt die Überlegung zugrunde, dass die existierenden Speichersysteme, welche bei der Speichervergabe auf alle Speichermedien frei zugreifen können, solange ausgezeichnet funktionieren, solange alle Speichermedien verfügbar sind und es keine Bandbreiten- bzw. Session-Limitierungen gibt. Soweit derartige Limitierungen vorliegen, sind solche Verteilungsstrategien nicht mehr optimal.

Demgegenüber wird vorgeschlagen, ein statisches und damit einfach zu kontrollierendes Speichersystem zu verwenden. Statisch bedeutet insbesondere, dass nicht jeder Datenproduzent auf jedes Speichermedium aufzeichnen darf, sondern, dass der Datenproduzent je nach geforderter Ausfallsicherheit des Speichersystems auf eine beschränkte Anzahl von Speichermedien, beispielsweise auf zwei Speichermedien, begrenzt, insbesondere ausschließlich, zugreifen darf. Durch die statische Zuweisung können systembedingte Limitierungen für einen Worst-Case-Fall überprüft werden und somit für die Laufzeit des Systems garantiert werden. Insbesondere erhöht sich die Vorhersehbarkeit des Speichersystems bei Worst-Case-Szenarien.

Bei einer besonders bevorzugten Ausführungsform der Erfindung ist das Speichersystem als ein Überwachungssystem und/oder mindestens ein Datenmitglied oder ein Datenproduzent als eine Überwachungskamera ausgebildet. Insbesondere sind das oder die Datenmitglieder mit den Speichermedien über ein Netzwerk verbunden. Wie bereits eingangs erläutert, ist gerade bei Überwachungssystemen, wie sie zum Beispiel zur Überwachung von öffentlichen Gebäuden, Plätzen, Unternehmen oder Fertigungsstandorten etc. eingesetzt werden, entscheidend, dass zum einen Datenströme mit inhaltlich zusammenhängenden Daten generiert werden und zum zweiten, dass es notwendig ist, diese Daten verlustfrei zu speichern. Insbesondere soll sichergestellt werden, dass die Daten zu einem späteren Zeitpunkt wieder zu einer Videoszene zusammengesetzt werden können. Bei klassischen Systemen, die das Speichermedium frei wählen können, ist stets zu befürchten, dass die Vergabestrategie zu vollständig zerstückelten Aufzeichnungen führt. Besonders gefährdet ist diese Vergabestrategie nach Hinzufügen oder Wegnehmen von Speichermedien.

Durch die statische Zuweisung ist dagegen sichergestellt, dass zusammengehörige Daten eines Datenmitglieds oder Datenproduzenten, insbesondere einer Überwachungskamera, auf einer genau definierten, nämlich statisch festgelegten Anzahl von Speichermedien nachvollziehbar abgelegt wird.

Besonders stark treten die Vorteile der Erfindung hervor, wenn die Anzahl N der Datenproduzenten größer als 6, vorzugsweise größer als 10 und insbesondere größer als 32 gewählt ist. Zugleich sollte der Wert $A \leq 6$, vorzugsweise $\leq 4$ und insbesondere $\leq$ oder $< 2$ gewählt sein. Bei einer freien Verteilung der Datenströme der Datenproduzenten auf alle verfügbaren Speichermedien werden die Datenströme stark defragmentiert. Dagegen ist durch das erfindungsgemäße Speichersystem sichergestellt, dass jeder Datenproduzent auf eine sehr überschaubare und/oder bekannte Menge von Datenmedien schreibt.

Eine Überlegung der Erfindung, um das Speichersystem sicher gegenüber Ausfällen von einer Anzahl von A Speichermedien zu gestalten, ist es jedem Datenproduzenten mindestens A+1 Speichermedien zum Aufzeichnen zur Verfügung zu stellen, also zuzuordnen. Aus Kostengründen ist es bevorzugt, A klein, insbesondere so klein wie möglich zu wählen. Eine mögliche Konstellation der Erfindung sieht daher vor, dass N Datenproduzenten auf M Speichermedien verteilt werden, wobei jeder Datenproduzent zwei Speichermedien bekommt, so dass A = 1 gewählt ist. Damit kann es maximal 2 aus M, also $\binom{M}{2}$, viele unterschiedliche Gruppen von Speichermedien geben. Bei einer bevorzugten Verteilung gibt es genau einen Datenproduzenten pro Gruppe.

Bei einer bevorzugten Weiterbildung der Erfindung ist vorgesehen, dass jeder der N Datenproduzenten einen Datenstrom mit einer Datenübertragungsrate aufweist, wobei die Datenmitglieder der Datenproduzenten so gewählt sind, dass die Datenübertragungsrate der Datenströme der N Datenproduzenten aneinander oder an eine gemeinsame Systemübertragungsrate angenähert oder gleich sind. Die Auswahl der Datenmitglieder und Einordnung in die Datenproduzenten wird von der Speichermanagementeinrichtung übernommen. Diese sortiert die Datenmitglieder so in Gruppen, dass die Gruppen in der Datenübertragungsrate ähnlich sind.

Es ist auch möglich, eine gemeinsame Systemübertragungsrate zu definieren und die Datenmitglieder so in die Datenproduzenten zu sortieren, dass die Datenübertragungsraten der Datenströme der Datenproduzenten gleich oder zumindest ähnlich zu der Systemübertragungsrate sind. Die gemeinsame Systemübertragungsrate kann wahlweise vom Benutzer vorgegeben werden oder abgeschätzt werden.

In einer konkretisierten Ausführungsform der Erfindung wird die gemeinsame Systemübertragungsrate festgelegt, wobei durch die Speichermanagementeinrichtung sichergestellt ist, dass die Datenmitglieder so sortiert sind, dass die Datenübertragungsraten der Datenströme der Datenproduzenten kleiner als das 2-fache, vorzugsweise kleiner als das 1,5-fache und insbesondere kleiner als das 1,3-fache und zugleich größer als das 0,5-fache, vorzugsweise größer als das 0,7-fache und insbesondere größer als das 0,8-fache der gemeinsamen Systemübertragungsrate ist.

Betrachtet man die bevorzugte Ausführungsform, bei der A=1 gewählt ist, so kann das Speichersystem ohne Umkonfiguration die zuvor genannten Abweichungen von der Systemübertragungsrate automatisch kompensieren, so dass die durchschnittliche Last auf alle Speichermedien konstant bleibt und damit die Lebensdauer der Daten für alle Datenproduzenten denselben Wert anstreben.

Erfindungsgemäß weist jedes der M Speichermedien einen Zähler auf, welcher einen Zählerstand bereitstellt. Der Zählerstand wird in Abhängigkeit eines Quotienten zwischen vergebenem Speicher und verfügbarer Speicherkapazität des Speichermediums erhöht. Weist das Speichermedium beispielsweise 100 Einheiten als Speicherkapazität auf und werden 10 Einheiten als Speicher vergeben, so wird der Zähler um 10/100, also um 0,1 erhöht.

Die Speichermanagementeinrichtung ist ausgebildet, einen Datenstrom von einem Datenproduzenten auf das Speichermedium der Gruppe von zugeordneten Speichermedien zu leiten, welches den niedrigsten Zählerstand aufweist. Die Speichermedien arbeiten nach einem FIFO-Prinzip, wobei - sobald das Speichermedium voll ist - der Speicher mit den ältesten Einträgen überschrieben wird.

Diese Verteilungssystematik hat den Vorteil, dass Daten von einem Datenproduzenten gleichmäßig auf die dem Datenproduzenten zugeordneten Speichermedien verteilt werden und insbesondere, dass keine Clusterbildung in den Speichermedien entsteht.

Für den Fall, dass die Zählerstände einer Gruppe von A+1 Speichermedien, die einem gemeinsamen Datenproduzenten zugeordnet sind, sich zu stark unterscheiden, wird als Gegenmaßnahme vorgeschlagen, alle Zählerstände auf 0 zu setzen oder auf einen gemeinsamen Zählerstand anzugleichen. Auch dieser Ausgestaltung liegt die Überlegung zugrunde, die Clusterbildung bei der Ablage der Daten eines Datenproduzenten weitgehend zu vermeiden. Ist in einer Gruppe von A+1 Speichermedien, die einem einzigen Datenproduzenten zugeordnet ist, ein Speichermedium mit einem im Vergleich zu den anderen Speichermedien sehr kleinen Zählerstand vorhanden, so wird die Speichermanagementeinrichtung den Datenstrom auf das Speichermedium lenken, das diesen geringen Zählerstand aufweist. Dies führt jedoch wieder zu einer Clusterbildung auf diesem Speichermedium. Aus diesem Grund wird vorgeschlagen, zum Beispiel bei Einsetzen eines neuen Speichermediums in das Speichersystem (welches damit einen Zählerstand von 0 aufweist) oder bei einem Auseinanderdriften der Zählerstände, diese wieder aneinander anzugleichen.

Ein weiterer Gegenstand der Erfindung betrifft ein Verfahren zum Betreiben des Speichersystems, wie es zuvor beschrieben wurde, bzw. nach einem der vorhergehenden Ansprüche. Bei dem Verfahren werden zunächst die Datenmitglieder auf die Datenproduzenten so verteilt, so dass jeder Datenproduzent eine ähnliche Datenübertragungsrate oder eine Systemübertragungsdatenrate aufweist. Nachfolgend werden den N Datenproduzenten eine Gruppe von (A+1) der M Speichermedien statisch zugeteilt.

Ein weiterer Gegenstand betrifft ein Computerprogramm mit den Merkmalen des Anspruchs 9.

Weitere Merkmale der Erfindung ergeben sich den nachfolgenden Beschreibungen bevorzugter Ausführungsbeispiele der Erfindung sowie der beigefügten Figuren. Dabei zeigen:

Figuren 1 bis 6      das Speichersystem in einer schematischen Blockdarstellung;
Figur 7      eine Schematisierung der Speicherverteilung.

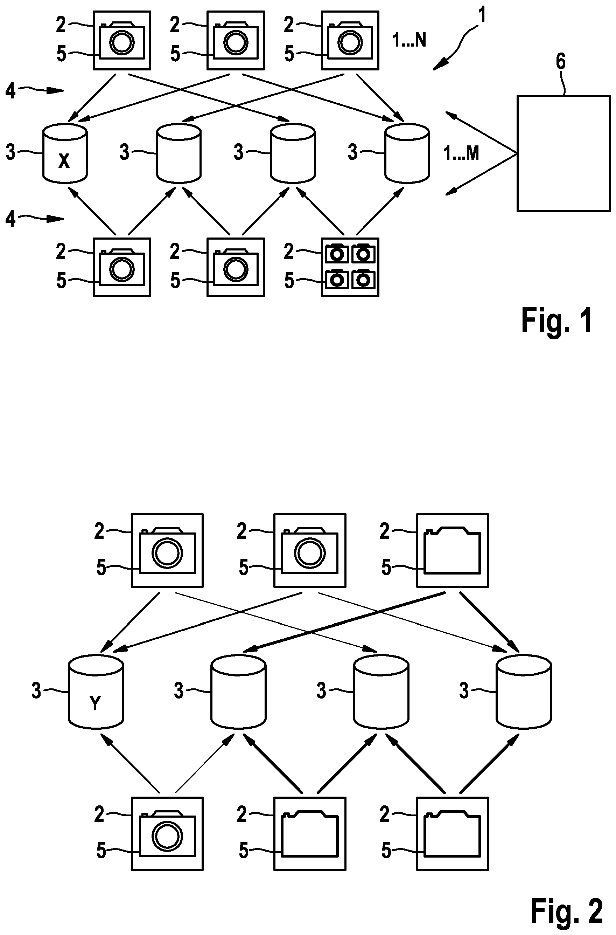

Die Figur 1 zeigt ein Speichersystem 1 mit einer Mehrzahl von N Datenproduzenten 2 sowie eine Mehrzahl M von Speichermedien 3. Die Datenproduzenten 2 sind mit den Speichermedien 3 datentechnisch, zum Beispiel über ein Netzwerk 4 verbunden. Bei dem Speichersystem 1 handelt es sich um ein Speichersystem 1 für ein Überwachungssystem mit einer Mehrzahl von Datenmitgliedern, wie z.B. Überwachungskameras 5. Die Überwachungskameras 5 sind bei beispielhaften Anwendungen auf Straßen, öffentliche Plätze, Firmengebäude etc. gerichtet und erzeugen Bilddatenströme, wobei die Bilddatenströme in den Speichermedien 3 abgelegt werden. Die Verteilung der Datenströme auf die verschiedenen Speichermedien 3 wird von einer Speichermanagementeinrichtung 6 organisiert. Jedem der Datenproduzenten 2 kann genau ein Datenmitglied, z.B. eine Überwachungskamera 5 oder - wie beispielhaft in der Figur 1 unten rechts gezeigt - eine Mehrzahl von Datenmitgliedern, z.B. mehrere Überwachungskameras 5 umfassen.

Bei dem Speichersystem 1 wird ein statisches und damit einfach zu kontrollierendes System umgesetzt. Statisch bedeutet dabei, dass nicht jeder Datenproduzent 2 bzw. jede Überwachungskamera 5 auf jedes Speichermedium 3 aufzeichnen darf, sondern die Auswahl - je nach geforderter Ausfallsicherheit des Speichersystems 1 - auf beispielsweise zwei Speichermedien 3 pro Datenproduzent 2 begrenzt ist. Durch die statische Zuweisung können systembedingte Limitierungen für den Worst-Case-Fall überprüft werden und somit für die Laufzeit des Speichersystems 1 garantiert werden.

Um das Speichersystem 1 sicher gegenüber Ausfällen von A Speichermedien 3 zu gestalten, müssen jedem Datenproduzenten 2 mindestens A+1 Speichermedien 3 zum Aufzeichnen zur Verfügung stehen. Der Worst-Case ergibt sich nun, wenn alle Datenproduzenten (N an der Zahl), die einem gemeinsamen Speichermedium X zugeordnet sind, gleichzeitig auf dieses aufzeichnen. Anders herum ausgedrückt, kann jeder Datenproduzent 2, insbesondere jede Überwachungskamera 5 auf ein beliebiges seiner (A+1) Speichermedien 3 aufzeichnen und muss somit bei jedem dieser Speichermedien 3 eine Session und entsprechende Bandbreite reservieren. Damit ergibt es sich, dass das Speichersystem 1 in Summe mindestens (A+1) x N viele Sessions und das (A+1)-fache an Gesamt-Streaming-Bandbreite zur Verfügung stellen muss. Daher ist es aus Kostengründen empfehlenswert, A so klein wie möglich zu wählen.

Im Folgenden wird daher der Fall betrachtet, dass A = 1 gewählt ist. Alle Überlegungen lassen sich aber auf den Fall A > 1 verallgemeinern.

Sollen N Datenproduzenten auf M Speichermedien verteilt werden, so dass jeder Datenproduzent 2 zwei Speichermedien 3 bekommt, dann gibt es maximal zwei aus M unterschiedliche Gruppen von Speichermedien 3, wobei in einer besonders geschickten Auslegung jeder Datenproduzent 2 die Speichermedien 3 von genau einer dieser Gruppen benutzt. Im einfachsten Fall gibt es genau einen Datenproduzenten 2 pro Gruppe, alle Datenproduzenten 2 schreiben mit derselben Bandbreite und alle Speichermedien 3 haben dieselben Eigenschaften.

Selbst unter diesen idealisierten Bedingungen wird die produzierte Bandbreite der Datenproduzenten 2 schwanken und nicht exakt vorhersehbar sein. Im Folgenden wird eine maximale Abweichung von der idealen Bandbreite hergeleitet, die das System ohne Umkonfiguration automatisch kompensieren kann, so dass die durchschnittliche Last auf alle Speichermedien konstant bleibt und damit die Lebensdauer der Daten für alle Datenproduzenten 2 oder Datenmitglieder, insbesondere Überwachungskameras 5 denselben Wert anstreben.

Im worst-case gibt es eine Menge von Datenproduzenten 2 mit schwarzen Überwachungskameras 5 in Figur 2, die um einen Faktor x mehr Datenrate produzieren als die anderen Kameras (oder äquivalent die Komplement-Menge produziert um einen Faktor x weniger Datenrate). Im worst-case muss diese Menge alle Datenproduzenten 2 umfassen, die genau ein Speichermedium Y nicht benutzen. Dann sind die anderen Datenproduzenten 2 gezwungen die Überlast auszugleichen, indem sie ihre kompletten Daten auf Speichermedium Y wegschreiben (d.h. die gestrichelten Pfeile in Figur 2 werden in dieser Situation nicht benutzt). In dem betrachteten Szenario schreiben also (M-1) Datenproduzenten 2 auf Speichermedium Y mit einer Rate R, während auf jedes andere Speichermedium M-2 Datenproduzenten 2 mit einer Rate von x * R / 2 schreiben (jeder Datenproduzent 2 verteilt im Prinzip seine Last gleichmäßig auf beide Speichermedien 3).

Damit erreicht das Speichersystem 1 eine Sättigung, wenn (M-1) * R = (M-2) * x * R / 2 gilt oder vereinfacht x = 2 * (M-1)/(M-2). D.h. für das skizzierte Beispiel erhält man eine mögliche Abweichung von x=2*3/2=3. Eine größere Abweichung würde dazu führen, dass die Schreib-Last nicht mehr gleichmäßig auf die Speichermedien 3 verteilt werden kann und somit das Speichersystem 1 den Gesamtspeicher aller Speichermedien 3 nicht mehr vollständig nutzen kann, d.h. die Lebensdauer der Daten muss bei der Nutzung des Gesamtspeichers zwangsläufig für verschiedene Datenproduzenten 2 divergieren.

Für größere Speichersysteme 1 mit mehr Speichermedien 3 sinkt zwar dieser worst-case Wert im Grenzfall auf 2, allerdings wird dessen Eintreten auch gleichzeitig immer unwahrscheinlicher. Diese einfache und statische Zuteilung von Datenproduzenten 2 auf Speichermedien 3 bleibt somit garantiert stabil, solange keine zwei Datenproduzenten 2 eine Bandbreitenabweichung oder Abweichung der Übertragungsrate von mehr als Faktor 2 aufweisen. Diese Aussage lässt sich verallgemeinern, dass zwei Datenproduzenten 2 von Überwachungskameras 5 (zwei Überwachungskameras 5 gehören zum selben Datenproduzenten 2, wenn sie denselben Speichermedien 3 zugeteilt sind) in Summe eine maximale Bandbreitenabweichung von 2 aufweisen dürfen.

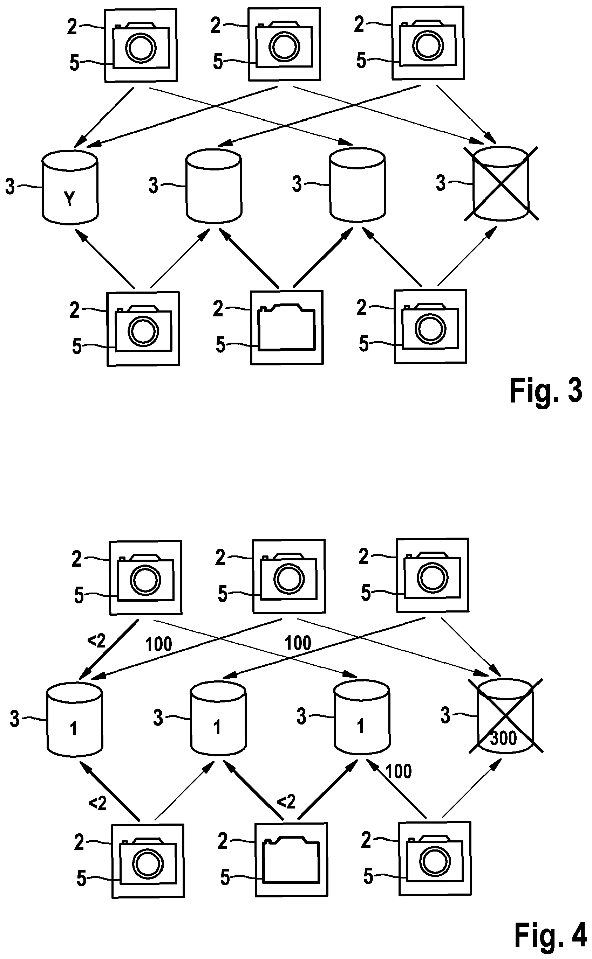

Eine Anforderung an das Speichersystem 1 ist Ausfallsicherheit gegenüber Speichermedien 3, wie nachfolgend mit Bezug auf die Figur 3 diskutiert wird. Dies ist ein Grund, weshalb jedem Datenproduzenten 2 mehrere Speichermedien 3 zugewiesen werden. Fällt nun ein Speichermedium 3 (durchgestrichen) aus, ändert sich auch die maximal erlaubte Bandbreiteschwankung, bei der das Speichersystem 1 im worst-case immer noch stabil läuft. Die Berechnung erfolgt analog zu Figur 2.

Auf Speichermedium Y zeichnen nach wie vor M-1 Datenproduzenten 2 auf, um die Überlast auf den anderen Speichermedien 3 zu kompensieren. Für die restlichen Datenproduzenten 2 steht nun ein Speichermedium 3 weniger zur Verfügung, so dass die Last auf die Verbleibenden entsprechend ansteigt. Eine Sättigung ergibt sich demnach, wenn (M-1)*R = (1 + (M-3)/2)*R*x bzw. nach Vereinfachung x = 2 gilt. D.h. ein Speichersystem 1 mit einfacher Ausfallsicherheit (A=1) sollte so aufgesetzt werden, dass kein Datenproduzent 2 über einen größeren Zeitraum gemittelt (groß bedeutet kleiner als beispielsweise 10% der möglichen maximalen Aufzeichnungsdauer) um mehr als die doppelte Bandbreite irgendeines anderen Datenproduzenten produziert. Damit ist garantiert, dass selbst beim Ausfall eines Speichermediums 3, das Speichersystem 1 stabil weiter arbeiten kann und die verbleibende Speicherkapazität optimal zwischen den Datenproduzenten 2 aufteilt. (Aufgrund des Ausfalls ist die Gesamtspeicherkapazität gesunken und somit die maximale Aufzeichnungsdauer.)

Soweit wurden gleichartige Speichermedien 3 betrachtet, d.h. insbesondere Speichermedien, die denselben Speicherplatz bzw. Speicherkapazität zur Verfügung stellen. Daraus ergibt sich, dass das Speichersystem 1 Bandbreitenschwankungen bis Faktor 2 selbst bei Ausfall eines Speichermediums 3 kompensieren kann.

Dieses Ergebnis lässt sich nur bedingt auf inhomogene Speichersysteme 1 übertragen, bei denen die Speichermedien 3 unterschiedlich groß sind, wie anhand der Figur 4 dargelegt wird. Dazu wird der folgende Extremfall betrachtet, in dem ein Speichermedium 3 sehr viel größer ist als alle anderen, z.B. um den Faktor 300. Dieses Speichermedium 3 fällt nun aus und eines der verbleibenden muss darüber hinaus die Überlast auf die anderen Speichermedien 3 kompensieren. Aus Symmetriegründen müssen die 300 Speichereinheiten des ausgefallenen Speichermediums 3 gleichmäßig auf die anderen Speichermedien 3 verteilt werden. Damit ist aber die Hauptlast den verbleibenden drei Speichermedien 3 bereits fix zugeteilt (jedes Speichermedium 3 hat im Beispiel dann eine Fixlast von 100) und die verbleibenden kleinen Gruppen können eventuelle Schwankungen von unter 5% ausgleichen. Diese Überlegung zeigt, dass in inhomogenen Systemen im Extremfall kein Bandbreitenausgleich möglich ist. Aus dieser Überlegung heraus wird das Speichersystem 1 mit homogenen Speichermedien 3, also in etwa gleich großen Speichermedien 3 ausgestattet.

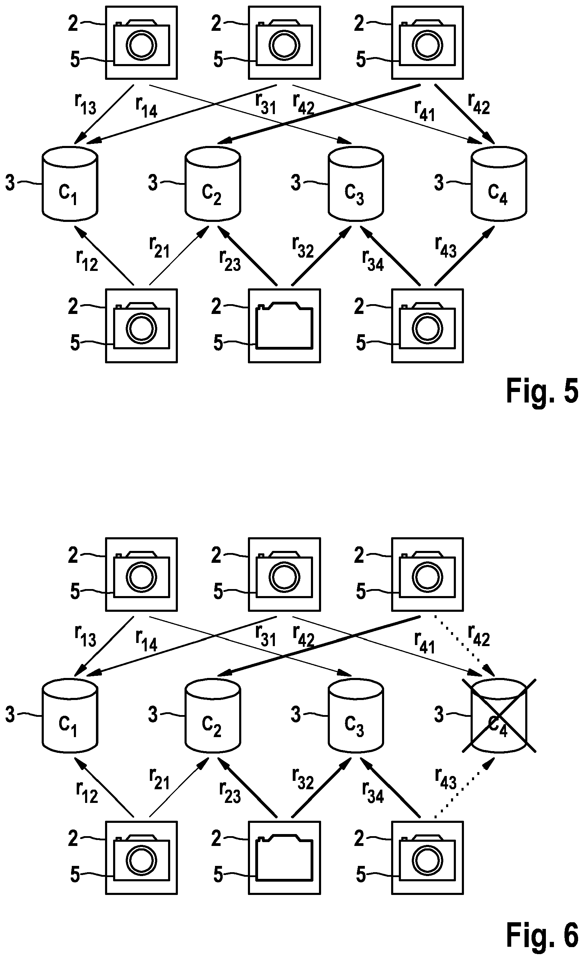

Mit Bezug auf die Figur 5 wird sich darauf konzentriert, dass die kompensierbare Bandbreitenschwankung für den Fall maximiert wird, dass kein Speichermedium 3 ausfällt. Zunächst werden wie in Figur 5 gezeigt die Speicherkapazitäten der Speichermedien 3 mit $C_i$ bezeichnet. Die Bandbreite eines Datenproduzenten, die auf Speichermedium i und j aufzeichnen, werden mit $r_{ij}$ und $r_{ji}$ bezeichnet. Dabei entspricht $r_{ij}$ der Bandbreite, die auf Speichermedium i geht, und $r_{ji}$ entsprechend der Bandbreite, die auf Speichermedium j geht. Die Gesamtbandbreite aller Datenproduzenten 2 zusammen sei R, die Gesamtspeicherkapazität C und die Aufzeichnungsdauer T. Daraus ergeben sich sofort folgende Bedingungen:

Die Aufzeichnungsdauer T entspricht dem Verhältnis aus Gesamtspeicherkapazität und Gesamtbandbreite:

$$[0] \qquad T = C \,/\, R$$

Die Summe aller eingehenden Kanten eines Speichermediums 3 müssen das Speichermedium 3 innerhalb einer Zeitdauer T vollständig beschreiben (vorausgesetzt das Speichersystem 1 befindet sich im Normalzustand), d.h.

$$[1] \qquad C_i = T * \text{sum}_{\{j!=i\}}\, r_{ij}.$$

Für die Gesamtspeicherkapazität C gilt:

$$[2] \qquad C = \text{sum}_i\, C_i.$$

Wählt man die Bandbreiten $r_{ij} = R * C_i * C_j / ((C - C_i) * C)$, so erhält man eine garantierte Bandbreitenkompensation von Faktor 2.
Diese Verteilung erfüllt Bedingung [1]:

$$[1'] \qquad T * \text{sum}_{\{j!=i\}}\, r_{ij}$$
$$= T * \quad R * C_i / ((C - C_i)*C) * \text{sum}\{j!=i\}\, C_j$$
$$= (C/R) * R * C_i / ((C - C_i)*C) * (C - C_i)$$
$$= \qquad C_i$$

Um den Faktor 2 zu verifizieren werden wie im homogenen Fall die Bandbreiten aller Datenproduzenten 2, die nicht auf $C_1$ aufzeichnen können, um einen Faktor 2 erhöht, während die anderen Datenproduzenten 2 zum Ausgleich ihre volle Last auf $C_1$ geben. Dabei müssen die Lastverhältnisse auf die einzelnen Speichermedien 3 unverändert bleiben. In Formeln geschrieben erhält man für das Verhältnis von Speichermedium $C_1$ zu Speichermedium $C_2$ folgende Ungleichung:

$$[3] \qquad T*(\text{sum}_{\{i!=1\}}\, r_{1i} + r_{i1})/C_1 >= x*T*(-r_{21} + \text{sum}_{\{i!=2\}} r_{2i})/C_2$$

Unter Benutzung von [0], [1] und [2] erhält man:

$$[4] \qquad 1 + (\text{sum}_{\{i!=1\}}\, C_i / (C - C_i)) >= x * (1 - C_1 / (C-C_2))$$

Es gilt nun folgende Ungleichheitskette:

$$[5] \quad 1 + (sum\_\{i!=1\}\ C\_i\ /\ (C - C\_i)) >=$$
$$1 + (sum\_\{i!=1\}\ C\_i\ /\ C) >=$$
$$2 - C\_1/C >=$$
$$2 * (1 - C\_1\ /\ (C-C\_2))$$

D.h. die vorgeschlagene Verteilung verkraftet im inhomogenen Fall Bandbreitenschwankungen von mindestens Faktor 2, wenn kein Speichermedium 3 ausgefallen ist, und ist somit asymptotisch optimal.

Im vorherigen Abschnitt wurde für jeden Datenproduzenten G_ij eine asymptotisch optimale Gesamtbandbreite pro Datenproduzent hergeleitet. Diese beträgt r_ij + r_ji = C_i * C_j * (1/(C-C_i) + 1/(C-C_j)) / T. Diese Bandbreite kann auch Systemübertragungsrate genannt werden.

Aufgabe der Speichermanagementeinrichtung ist es, die Datenmitglieder, insbesondere die Überwachungskameras 5 so auf die Datenproduzenten 2 zu verteilen, dass diese idealen Gesamtbandbreiten pro Datenproduzent 2 erreicht werden.

Die Verteilung kann beispielsweise durch den folgenden Algorithmus erreicht werden:

```
const int N = ...; // Anzahl der Speichermedien (3)
const int M = ...; // Anzahl der Kameras (Datenmitglieder)
const int G = N * (N-1)/2; // Anzahl der Gruppen/Datenproduzenten (2)

// Liste mit den Groessen der Speichermedien
vector< float > SpeicherGroessen(N, 0);
// Liste mit den Bandbreitenwerten der Kameras
vector< float > KameraBandbreiten(M);
// Liste mit den verbleibenden Bandbreitenkontingenten jeder Gruppe
vector< float > GruppenRestGroessen(G,0);
// Gruppen sortiert nach Groesse
set< pair< float, int > > SortierteRestGroessen;
// Zuordnung der Kameras zu Gruppen
vector< int > KameraGruppen(M,-1);
// Zuordnung der Gruppen zu Speicher
vector< pair< int, int > > GruppenSpeicher(G);

void main() {
Initialisierung();
GreedyZuordnung();
for(;LokaleOptimierung();); // Vertausche solange zwei Kameras, bis keine
Verbesserung mehr moeglich ist

// Ausgabe
for(int Kamera = 0; Kamera < M; Kamera++) {
        int Gruppe = KameraGruppen[Kamera];
        cout << "Kamera " << Kamera << "zeichnet auf Speicher"
           << GruppenSpeicher[Gruppe].first << "und"
                << GruppenSpeicher[Gruppe].second << "auf" << endl;
}
}

void Initialisierung() {
// Fuelle SpeicherGroessen entsprechend der Groesse der Speichermedien
...
... // Fuelle KameraBandbreiten entsprechend der erwarteten Bandbreiten der
Kameras
...

... // Berechne GesamtSpeicher und GesamtBandbreite
float GesamtSpeicher = 0;
for(int Speicher = 0; Speicher < N; Speicher++)
        GesamtSpeicher += SpeicherGroessen[Speicher];
float GesamtBandbreite = 0;
```

```
for(int Kamera = 0; Kamera < M; Kamera++)
        GesamtBandbreite += KameraBandbreiten[Kamera];
float T = GesamtSpeicher / GesamtBandbreite;

// Leite die zu erzielenden GruppenGroessen aus den SpeicherGroessen und
KameraBandbreiten ab
int Gruppe = 0;
for(int Speicher1 = 0; Speicher1 < N; Speicher1++) {
        for(int Speicher2 = Speicher1+1; Speicher2 < N; Speicher2++) {
                GruppenRestGroessen[Gruppe] =
                        SpeicherGroessen[Speicher1] *
                        SpeicherGroessen[Speicher2]
                        *(1 / (Gesamtspeicher - SpeicherGroessen[Speicher1])
                          + 1 / (GesamtSpeicher - SpeicherGroessen[Speicher2]))
                        / T;
                GruppenSpeicher[Gruppe].first = Speicher1;
                GruppenSpeicher[Gruppe].second = Speicher2;
                Gruppe++;
        }
}

// fuelle Hilfsstruktur
for(int i = 0; i < G; i++)
        SortierteRestGroessen.insert(make_pair(GruppenRestGroessen[i], i));
        }

        void GreedyZuordnung() {
// baue eine sortierte Liste der KameraBandbreiten
vector< pair< float, int > > SortierteBandbreiten(G);
for(int Kamera = 0; Kamera < M; Kamera++) {
        SortierteBandbreiten[Kamera].first = KameraBandbreiten[Kamera];
        SortierteBandbreiten[Kamera].second = Kamera;
}
sort(SortierteBandbreiten.begin(), SortierteBandbreiten.end());

while(SortierteBandbreiten.size()) {
        // merke die Kamera mit der groessten Bandbreite und entferne sie aus
        der sortierten Liste
        int Kamera = SortierteBandbreiten.back().second;
        SortierteBandbreiten.pop_back();

        // fuege die Kamera der Gruppe zu, die noch am meisten Kontingent
        uebrig hat
        int Gruppe = (--SortierteRestGroessen.end())->second;
        SortierteRestGroessen.erase(--SortierteRestGroessen.end());
        KameraGruppen[Kamera] = Gruppe;
        GruppenRestGroesse[Gruppe] -= KameraBandbreiten[Kamera];
        SortierteBandbreiten.insert(make_pair(GruppenRestGroesse[Gruppe],
        Gruppe));
}
}

void AendereKameraZuordnung(int Kamera, int Gruppe) {
int alteGruppe = KameraGruppen[Kamera];
if (alteGruppe == Gruppe) // gleiche Gruppe => nichts zu tun
        return;

// entferne betroffene Gruppen aus der sortierte Menge
SortierteRestGroessen.erase(make_pair(GruppenRestGroesse[alteGruppe],
alteGruppe));
SortierteRestGroessen.erase(make_pair(GruppenRestGroesse[Gruppe],
Gruppe));
```

```
// veraendere die Gruppen und weise die Kamera der neuen Gruppe zu
GruppenRestGroesse[alteGruppe] += KameraBandbreiten[Kamera];
KameraGruppen[Kamera] = Gruppe;
GruppenRestGroesse[Gruppe] -= KameraBandbreiten[Kamera];

// fuege die veraenderten Gruppen wieder in die sortierte Menge ein
SortierteRestGroessen.insert(make_pair(GruppenRestGroesse[Kamera],
Kamera));
SortierteRestGroessen.insert(make_pair(GruppenRestGroesse[alteGruppe],
alteGruppe));
}
bool LokaleOptimierung() {
bool Aenderungen = false;
for(int Kamera1 = 0; Kamera1 < M; Kamera1++) {
        for(int Kamera2 = 0; Kamera2 < M; Kamera2++) {
                int Gruppe1 = KameraGruppen[Kamera1];
                int Gruppe2 = KameraGruppen[Kamera2];
                // Suche nach Kameras, die in unterschiedlichen Gruppen liegen
                if (Gruppe1 == Gruppe2) continue;

                // Wird der quadratische Abstand zur Gruppenzielgroesse kleiner,
                // wenn die beiden Kameras ausgetauscht werden?
                int RestGroesse1 = GruppenRestGroesse[Gruppe1] +
                KameraBandbreiten[Kamera1] - KameraBandbreiten[Kamera2];
                int RestGroesse2 = GruppenRestGroesse[Gruppe2] +
                KameraBandbreiten[Kamera2] - KameraBandbreiten[Kamera1];
                // square(x) berechnet das Quadrat von x: x*x
                if (square(RestGroesse1) + square(RestGroesse2) >=
                        square(GruppenRestGroesse[Gruppe1]) +
                        square(GruppenRestGroesse[Gruppe2]))
                        continue;

                AendereKameraZuordnung(Kamera1, Gruppe2);
                AendereKameraZuordnung(Kamera2, Gruppe1);

                Aenderungen = true;
        }
}
return Aenderungen;
```

Mit der hergeleiteten Übertragungsrate $r_{ij}$ kann bei einer Bandbreitenschwankung von 2 eine optimale Auslastung der inhomogenen Speichermedien 3 garantiert werden. Figur 6 zeigt den Ausfall von Speichermedium C4 und den gleichzeitigen Bandbreiten-Anstieg aller Datenproduzenten 2, die nicht auf Speichermedium C1 aufzeichnen. Für das Lastverhältnis von Speichermedium C1 zu Speichermedium C2 ergibt sich dann folgende Ungleichung:

$$[6] \qquad T*(sum\_\{i!=1\}\ r\_1i+r\_i1)/C\_1 >= x*T*(r\_42-r\_21+sum\_\{i!=2\}r\_2i)/C\_2$$

Unter Benutzung von [0], [1] und [2] erhält man:

$$[7] \qquad 1+sum\{i!=1\}C\_i/(C-C\_i) >= x*(1 – C\_1/(C-C\_2) + C\_4/(C-C\_4))$$

Der linke Term lässt sich nach unten mit 2 - $C\_1/C$ abschätzen. Das Lastverhältnis x nimmt seinen schlechtesten Wert dann an, wenn $C\_2$ und $C\_4$ dem größten Speichermedium (im folgenden mit $C\_{max}$ bezeichnet) und $C\_1$ dem kleinsten Speichermedium (im folgenden mit $C\_{min}$ bezeichnet) entsprechen. Es ergibt sich dann als garantierte untere Schranke für das Lastverhältnis:

$$[8] \qquad x >= (2 – C\_min/C) * (C-C\_max) / (C-C\_min)$$

Mit Ungleichung [8] kann für jedes inhomogene Speichersystem 1 ein garantierter Lastausgleich für den Fall berechnet werden, dass ein Speichermedium 3 ausfällt und somit die Güte der Auswahl der Speichermedien 3 ermittelt werden.

Die vorangegangenen Betrachtungen haben sich vorwiegend mit der Eingangslast auf die Speichermedien beschäftigt. Damit verbleibt das Problem der optimalen Speicherfreigabe. Dazu wird für jeden Datenproduzenten 2 die aktuelle Aufzeichnungsdauer als diejenige Zeitspanne definiert, für die von jetzt bis in die Vergangenheit alle Videodaten ohne Verlust vorhanden sind (liegen Daten auf einem ausgefallen Speichermedium, so gelten diese nicht als verloren).

Kriterium [Z]: Ziel der Speichermanagementeinrichtung 6 ist es die kleinste Aufzeichnungsdauer über alle Kameras zu maximieren.

Hierzu werden zunächst wieder Extrembeispiele betrachtet, die zu vermeiden sind und von denen sich einfache Lösungsansätze nicht erholen.

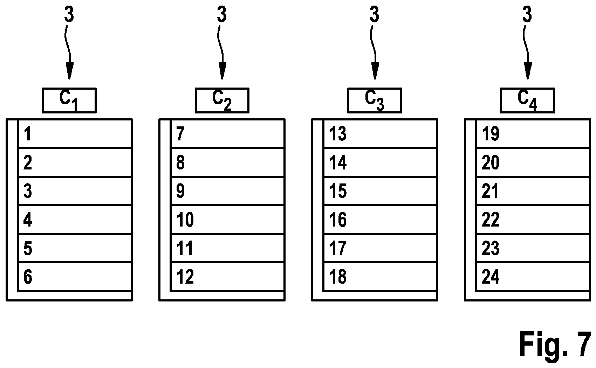

In der Figur 7 werden drei Speichermedien 3 mit gleicher Kapazität gezeigt. Alle drei Speichermedien 3 waren zu Beginn leer und wurden sequentiell gefüllt (beispielsweise weil ein Speichermedium 3 nach dem anderen in das Speichersystem 1 aufgenommen wurde). Die mit Zahlen versehenen Rechtecke eines Speichermediums 3 entsprechen der Reihenfolge in der die Speicherblöcke beschrieben wurden. D.h. um Kriterium [Z] zu optimieren würde man immer den Speicherblock mit der kleinsten Zahl als nächstes beschreiben.

Nun werden Systemlimitierungen hinzu gefügt, so dass man gezwungen ist, eine Verteilung wie bei der Figur 3 vorgeschlagen zu verwenden. Fällt nun Speichermedium C1 aus, so müssen die Datenproduzenten 2, die nur zwischen C1 und C4 wählen können zwangsläufig auf C4 aufzeichnen. Das hat zur Folge, dass die jüngsten Blöcke als erstes überschrieben werden und somit nach obiger Zielvorgabe die tatsächliche Aufzeichnungsdauer gegen 0 geht.

Es ist zwar unwahrscheinlich, dass man diesen Extremfall in Reinform in der Praxis anfindet. Nichtsdestotrotz kann man daraus ein allgemeines Speichervergabeprinzip ableiten. Und zwar müssen zeitliche Speichercluster bei der Speichervergabe vermieden werden, da ansonsten bei Speicherausfällen oder anderen Veränderungen des Speichersystems 1, die Aufzeichnungsdauer dramatisch einbrechen kann. Umgekehrt formuliert muss die Speichermanagementeinrichtung 6 gewährleisten, dass Speicherblöcke ähnlichen Alters möglichst gleichmäßig über die verschiedenen Speichermedien 3 verteilt sind.

Um dieses Ziel zu erreichen liegt es nahe, die aktuelle Altersstruktur bei der Vergabe zu berücksichtigen. Dieses Vorgehen hat allerdings den großen Nachteil, dass jede Unregelmässigkeit in der Altersstruktur sich zwangsläufig nach einem kompletten Überschreiben des Speichers (im folgenden auch Periode genannt) wiederfinden lässt (eventuell in abgeschwächter Form). Die einfachste Art die aktuelle Altersstruktur zu betrachten ist, den ältesten Block jedes Speichermediums zu betrachten. An einen Datenproduzenten 2 wird nun Speicher des Speichermediums 3 mit dem ältesten Block vergeben. Dabei werden nur Speichermedien 3 berücksichtigt, auf die der Datenproduzent 2 auch aufzeichnen darf. Dieses Vorgehen wiederholt im Wesentlichen die bereits existierende Altersstruktur und ist somit ungeeignet. Durch randomisierte Ansätze kann man die Situation etwas verbessern. Der Zufall hat hierbei die Aufgabe, die aktuelle Altersstruktur bei der Auswahl weniger stark zu berücksichtigen und somit die Wiederholung der Speichercluster in der nächsten Periode zu reduzieren.

Als ein Ausführungsbeispiel wird nun ein Algorithmus vorgeschlagen, der die aktuelle Altersstruktur komplett ignoriert und sich damit nach spätestens einer Periode vollständig von Störungen erholt hat. Der Algorithmus arbeitet wie folgt. Für jedes Speichermedium 3 wird ein Zähler eingeführt, der jedes Mal, wenn Speicher von diesem Speichermedium 3 an einen Datenproduzenten 2 vergeben wird, um den entsprechenden prozentualen Anteil des vergebenen Speichers zum Gesamtspeicher dieses Speichermediums 3 erhöht wird. Fordert ein Datenproduzent 2 Speicher der der Speichermanagementeinrichtung 6 an, so vergleicht die Speichermanagementeinrichtung 6 die Zählerstände der potentiellen Speichermedien 3 und teilt dem Datenproduzenten 2 Speicher von dem Speichermedium 3 mit dem geringsten Zählerstand zu. Damit hält die Speichermanagementeinrichtung 6 die Zählerstände möglichst auf Gleichstand.

Driften die Zählerstände auseinander, wurden die Datenproduzenten 2 derart auf die Speichermedien 3 verteilt, dass es unmöglich ist, die Speichermedien 3 gleichmäßig zu befüllen. Sind die Zählerstände weit auseinander gedriftet, so würde der Algorithmus nach einer Korrektur der Zuweisung der Datenproduzenten 2 oder Datenmitgliedern zu Datenproduzenten 2 und zu Speichermedien 3 anfangen, das Speichermedium 3 mit dem kleinsten Zählerstand zu bevorzugen und somit eine Clusterbildung entstehen lassen. Daher müssen die Zählerstände nach einer Korrektur entweder wieder auf 0 gesetzt werden oder der minimale Zählerstand künstlich erhöht werden, wenn die Abweichung zum maximalen Zählerstand zu groß wird. Dieselbe Situation entsteht, wenn ein neues Speichermedium 3 in das Speichersystem aufgenommen wird. Auch hier muss der Zählerstand des neuen Speichermediums 3 beispielsweise auf den Durchschnitt der anderen Zähler initialisiert werden. Ist ein Speichermedium 3 ausgefallen und kommt wieder in das Speichersystem 1 zurück, gilt das gleiche.

Eine mögliche Ausführung zu der Speichervergabe ist nachfolgend dargestellt:

```
// Zaehler fuer Speichermedium i
float SpeicherZaehler[M];
```

```
// Groesse des Speichermediums i
float SpeicherGroesse[M];
// Verfuegbarkeit des Speichermediums i
bool SpeicherOnline[M];
// Liste der Speichermedien, die von Kamera i benutzt werden duerfen.
vector<int> KameraSpeicher[N];

// initialisiere alle Variablen
void Init() {
for (int i = 0; i < M; i++) {
        // zu Beginn werden alle Zaehler auf den gleichen Wert gesetzt
        SpeicherZaehler[i] = 0;
      // Setze die SpeicherGroesse
        SpeicherGroesse[i] = ...;
        SpeicherOnline[i] = true;
}
// Fuege fuer jede Kamera i die erlaubten Speichermedien j in
// die Liste KameraSpeicher ein.
...
}
// Wenn eine Kamera neuen Speicher braucht, wird die Funktion HoleSpeicher
auf,
// um den Index des Speichermediums zu erhalten, auf den die Kamera j als
naechstes
// aufzeichnen soll.
// Returnwert ist -1, wenn keines der zugewiesenen Speichermedien online ist.
int HoleSpeicher(int Kamerald) {
int Speicherld = -1;
for (int k = 0; k < KameraSpeicher[Kamerald].size(); k++) {
        int Speicherld2 = KameraSpeicher[Kamerald][k];
        if (SpeicherOnline[Speicherld2]) {
                // auf welchen Speicher wurde weniger aufgezeichnet?
                if (Speicherld == -1 oder
                SpeicherZaehler[Speicherld2] < SpeicherZaehler[Speicherld])
                        Speicherld = Speicherld2;
        }
}
if (Speicherld >= 0) {
        // Erhoehe den Zaehler des ausgewaehlten Speichers um eine Einheit
        // normiert auf die Gesamt-SpeicherGroesse.
        SpeicherZaehler[Speicherld] += 1/SpeicherGroesse[Speicherld];
}
return Speicherld;
}
// Wenn ein Speichermedium ausfaellt, wird die Funktion SpeicherAusgefallen
gerufen.
void SpeicherAusgefallen(int Speicherld) {
SpeicherOnline[i] = false;
}
// Ist ein ausgefallenes Speichermedium wieder verfuegbar, wird die Funktion
// SpeicherVerfuegbar gerufen.
void SpeicherVerfuegbar(int Speicherld) {
int OnlineZaehler = 0;
float ZaehlerSumme = 0;
for(int i = 0; i < M; i++) {
        if (SpeicherOnline[i]) {
                OnlineZaehler += 1;
                ZaehlerSumme += SpeicherZaehler[i];
        }
}
SpeicherOnline[Speicherld] = true;
// Setze den Zaehler auf den Mittelwert der Zaehler der verfuegbaren Speicher
if (OnlineZaehler)
```

```
      SpeicherZaehler[SpeicherId] = ZaehlerSumme / OnlineZaehler;
 // Wenn es keine anderen online Speicher gibt, muss der Zaehler auch nicht mit
 // anderen Zaehlern synchronisiert werden.
 }
```

**Patentansprüche**

1. Speichersystem (1)
   mit einer Anzahl von M Speichermedien (3),
   mit einer Anzahl von N Datenproduzenten (2), die jeweils einen Datenstrom (rij + rji) bereitstellen und die jeweils ein oder mehrere Datenmitglieder (5) aufweisen,
   mit einer Speichermanagementeinrichtung (6) zur Verteilung der Datenströme (rij + rji) der N Datenproduzenten (2) an die M Speichermedien (3), wobei jedem der N Datenproduzenten (2) eine Gruppe von (A+1) der M Speichermedien (3) während einer Laufzeit des Speichersystems (1) statisch zugeordnet ist, wobei 1 <=A<M
   **dadurch gekennzeichnet,**
   **dass** die M Speichermedien (3) eine ähnliche Speicherkapazität aufweisen, so dass die Abweichung von einer gemittelten Speicherkapazität über alle M Speichermedien weniger als 20% beträgt, dass jedes Speichermedium (3) einen Zähler aufweist, welcher ausgebildet ist, in Abhängigkeit zu dem Quotienten zwischen vergebenen Speicher und verfügbaren Speicher den Zählerstand zu ändern und dass die Speichermanagementeinrichtung (6) ausgebildet ist, den Datenstrom eines Datenproduzenten (2) auf das zugeordnete Speichermedium (3) mit dem geringsten Zählerstand zu verteilen, wobei die Speichermedien (3) nach einem FIFO-Prinzip arbeiten, wobei - sobald das Speichermedium voll ist - der Speicher mit den ältesten Einträgen überschrieben wird, und dass die Zählerstände einer Gruppe von (A+1) Speichermedien (3), die einem einzigen Datenproduzenten (2) zugeordnet sind, bei einer manuellen Korrektur oder bei Aufnahme eines neuen Speichermediums auf 0, auf einen einheitlichen Wert oder auf einen gemittelten Wert gesetzt werden.

2. Speichersystem (1) nach Anspruch 1, **dadurch gekennzeichnet, dass** das Speichersystem (1) als ein Überwachungssystem und mindestens ein Datenmitglied als eine Überwachungskamera (5) ausgebildet ist.

3. Speichersystem (1) nach einem Anspruch 1 oder 2, **dadurch gekennzeichnet, dass** die Anzahl N der Datenproduzenten (2) größer als 6, vorzugsweise größer als 10 und insbesondere größer als 20 und zugleich A kleiner gleich 6, vorzugsweise kleiner gleich 4 und insbesondere kleiner gleich oder kleiner 2 gewählt ist.

4. Speichersystem (1) nach einem der vorhergehenden Ansprüche, **dadurch gekennzeichnet, dass** jede der N Datenproduzenten (2) einen Datenstrom mit einer Datenübertragungsrate aufweist, wobei die Datenmitglieder (5) der Datenproduzenten (2) so gewählt sind, dass die Datenübertragungsraten der Datenströme aneinander oder an eine gemeinsame Systemübertragungsrate angenähert oder gleich sind.

5. Speichersystem (1) nach einem der vorhergehenden Ansprüche, **dadurch gekennzeichnet, dass** jede der N Datenproduzenten (2) einen Datenstrom mit einer Datenübertragungsrate aufweist, wobei die Datenmitglieder (5) der Datenproduzenten (2) so gewählt sind, dass die Datenübertragungsraten der Datenströme kleiner als das 2-fache, vorzugsweise kleiner als das 1,5 fache und insbesondere kleiner als das 1,3 fache und zugleich größer als das 0.5-fache vorzugsweise größer als das 0,7fache und insbesondere größer als das 0,8 fache von einer gemeinsamen Systemübertragungsrate ist.

6. Verfahren zum Betrieb des Speichersystems (1) nach einem der vorhergehenden Ansprüche, wobei das Speichersystem eine Vielzahl der Datenmitglieder (5), N Datenproduzenten (2) und M Speichermedien (3) aufweist, wobei die Datenmitglieder (5) auf die N Datenproduzenten (2) verteilt werden und dass jedem der N Datenproduzenten eine Gruppe von (A+1) der M Speichermedien (3) statisch zugeordnet ist, wobei 1<=A<M.

7. Verfahren nach Anspruch 6, **dadurch gekennzeichnet, dass** die Datenmitglieder (5) so auf die Datenproduzenten (2) verteilt werden, dass die Datenübertragungsraten der Datenproduzenten (2) aneinander angenähert oder gleich sind.

8. Verfahren nach Anspruch 6 oder 7, **dadurch gekennzeichnet, dass** jeder der M Speichermedien einen Zähler aufweist, dessen Zählerstand in Abhängigkeit eines Quotienten von abgerufenem Speicher zu verfügbaren Speicher erhöht wird und dass die Speichermanagementeinrichtung (6) einem Datenproduzenten (2) das Speichermedium (3) zuteilt, das den geringsten Zählerstand aufweist.

9. Computerprogramm mit Programmcode-Mitteln, um alle Schritte des Verfahrens nach Anspruch 6 bis 8 durchzuführen, wenn das Programm auf einem Computer und/oder dem Speichersystem (1) von jedem Beliebigen der Ansprüche 1 bis 5 ausgeführt wird.

**Claims**

1. Storage system (1)
having a number of M storage media (3),
having a number of N data producers (2) each providing a data stream (rij + rji) and each having one or more data members (5),
having a storage management device (6) for distributing the data streams (rij + rji) from the N data producers (2) to the M storage media (3), wherein a group of (A+1) of the M storage media (3) is statically assigned during a running time of the storage system (1) to each of the N data producers (2), where 1<=A<M,
**characterized**
**in that** the M storage media (3) have a similar storage capacity, with the result that the deviation from an averaged storage capacity over all M storage media is less than 20%, in that each storage medium (3) has a counter which is designed to change the counter reading on the basis of the quotient between the allocated memory and available memory, and in that the storage management device (6) is designed to distribute the data stream from a data producer (2) to the assigned storage medium (3) with the lowest counter reading, wherein the storage media (3) operate according to a FIFO principle, wherein - as soon as the storage medium is full - the memory with the oldest entries is overwritten, and in that the counter readings of a group of (A+1) storage media (3) assigned to a single data producer (2) are set to 0, to a uniform value or to an averaged value in the event of a manual correction or in the event of inclusion of a new storage medium.

2. Storage system (1) according to Claim 1, **characterized in that** the storage system (1) is in the form of a surveillance system and at least one data member is in the form of a surveillance camera (5).

3. Storage system (1) according to Claim 1 or 2, **characterized in that** the number N of data producers (2) is selected to be greater than 6, preferably greater than 10 and, in particular, greater than 20, and A is simultaneously selected to be less than or equal to 6, preferably less than or equal to 4 and, in particular, less than or equal to 2 or less than 2.

4. Storage system (1) according to one of the preceding claims, **characterized in that** each of the N data producers (2) has a data stream at a data transmission rate, the data members (5) of the data producers (2) being selected in such a manner that the data transmission rates of the data streams are approximate or equal to one another or to a common system transmission rate.

5. Storage system (1) according to one of the preceding claims, **characterized in that** each of the N data producers (2) has a data stream at a data transmission rate, the data members (5) of the data producers (2) being selected in such a manner that the data transmission rates of the data streams are less than twice, preferably less than 1.5 times and, in particular, less than 1.3 times and simultaneously greater than 0.5 times, preferably greater than 0.7 times and, in particular, greater than 0.8 times a common system transmission rate.

6. Method for operating the storage system (1) according to one of the preceding claims, the storage system having a multiplicity of data members (5), N data producers (2) and M storage media (3), the data members (5) being distributed to the N data producers (2), and a group of (A+1) of the M storage media (3) being statically assigned to each of the N data producers, where 1<=A<M.

7. Method according to Claim 6, **characterized in that** the data members (5) are distributed to the data producers (2) in such a manner that the data transmission rates of the data producers (2) are approximate or equal to one another.

8. Method according to Claim 6 or 7, **characterized in that** each of the M storage media has a counter, the counter reading of which is increased on the basis of a quotient of retrieved memory to available memory, and **in that** the storage management device (6) allocates the storage medium (3) having the lowest counter reading to a data producer (2).

9. Computer program having program code means for carrying out all of the steps of the method according to Claims 6 to 8 if the program is executed on a computer and/or the storage system (1) from any of Claims 1 to 5.

**Revendications**

1. Système de mémorisation (1)
comprenant un nombre de M supports de mémorisation (3), comprenant un nombre de N producteurs de données (2) qui délivrent respectivement un flux de données (rij + rji) et qui possèdent respectivement un ou plusieurs membres de données (5),
comprenant un dispositif de gestion de mémoire (6) destiné à distribuer les flux de données (rij + rji) des N de producteurs de données (2) aux M supports de mémorisation (3),
un groupe de (A+1) des M supports de mémorisation (3) étant associé de manière statique aux N de producteurs de données (2) pendant une durée de fonctionnement du système de mémorisation (1), avec 1 <= A < M
**caractérisé en ce**
**que** les M supports de mémorisation (3) possèdent une capacité de mémorisation similaire, de sorte que l'écart entre une capacité de mémorisation moyenne calculée sur la totalité des M supports de mémorisation est inférieur à 20 %,
**que** chaque support de mémorisation (3) possède un compteur qui est configuré pour modifier l'état de comptage en fonction du quotient entre la mémoire attribuée et la mémoire disponible, et
**que** le dispositif de gestion de mémoire (6) est configuré pour distribuer le flux de données d'un producteur de données (2) sur le support de mémorisation (3) associé dont l'état de comptage est le plus faible, les supports de mémorisation (3) fonctionnant selon un principe FIFO, la mémoire ayant les enregistrements les plus anciens étant réécrite dès que le support de mémorisation est plein, et
**que** les états de comptage d'un groupe de (A+1) supports de mémorisation (3) qui sont associés à un producteur de données (2) unique, lors d'une correction manuelle ou lors de l'accueil d'un nouveau support de mémorisation, sont mis à 0, à une valeur homogène ou à une valeur moyenne calculée.

2. Système de mémorisation (1) selon la revendication 1, **caractérisé en ce que** le système de mémorisation (1) est réalisé sous la forme d'un système de surveillance et au moins un membre de données sous la forme d'une caméra de surveillance (5).

3. Système de mémorisation (1) selon la revendication 1 ou 2, **caractérisé en ce que** le nombre N de producteurs de données (2) est supérieur à 6, de préférence supérieur à 10 et notamment supérieur à 20 et en même temps A est choisi inférieur ou égal à 6, de préférence inférieur ou égal à 4 et notamment inférieur ou égal à 2.

4. Système de mémorisation (1) selon l'une des revendications précédentes, **caractérisé en ce que** chacun des N de producteurs de données (2) possède un flux de données avec un débit de transmission de données, les membres de données (5) des producteurs de données (2) étant choisis de telle sorte que les débits de transmission de données des flux de données sont proches ou égaux les uns des autres ou d'un débit de transmission commun du système.

5. Système de mémorisation (1) selon l'une des revendications précédentes, **caractérisé en ce que** chacun des N de producteurs de données (2) possède un flux de données avec un débit de transmission de données, les membres de données (5) des producteurs de données (2) étant choisis de telle sorte que les débits de transmission de données des flux de données sont inférieurs au double, de préférence inférieurs à 1,5 fois et notamment inférieurs à 1,3 fois et en même temps supérieurs à 0,5 fois, de préférence supérieurs à 0,7 fois et notamment supérieurs à 0,8 fois un débit de transmission commun du système.

6. Procédé pour faire fonctionner le système de mémorisation (1) selon l'une des revendications précédentes, le système de mémorisation possédant une pluralité de membres de données (5), N producteurs de données (2) et M supports de mémorisation (3), les membres de données (5) étant distribués sur les N producteurs de données (2) et qu'un groupe de (A+1) des M supports de mémorisation (3) est associé de manière statique aux N de producteurs de données, avec 1 <= A < M.

7. Procédé selon la revendication 6, **caractérisé en ce que** les membres de données (5) sont distribués sur les producteurs de données (2) de telle sorte que les débits de transmission de données des producteurs de données (2) sont proches ou égaux les uns des autres.

**8.** Procédé selon la revendication 6 ou 7, **caractérisé en ce que** chacun des M supports de mémorisation possède un compteur dont l'état de comptage est incrémenté en fonction d'un quotient entre la mémoire invoquée et la mémoire disponible, et **en ce que** le dispositif de gestion de mémoire (6) attribue à un producteur de données (2) le support de mémorisation (3) qui possède l'état de comptage le plus faible.

**9.** Programme d'ordinateur comprenant des moyens de code de programme pour exécuter toutes les étapes du procédé selon les revendications 6 à 8 lorsque le programme est exécuté sur un ordinateur et/ou un système de mémorisation (1) selon l'une quelconque des revendications 1 à 5.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10301455 A1
- DE 102006018959 A1
- US 20030117500 A1